# EUROPÄISCHE PATENTSCHRIFT

(11) **EP 4 540 881 B1**
(45) Veröffentlichungstag und Bekanntmachung des Hinweises auf die Patenterteilung: **08.04.2026**
(21) Anmeldenummer: 23733696.1
(22) Anmeldetag: 15.06.2023
(51) Int. Cl.: H01M 8/248

(54) **BEFESTIGUNGSVORRICHTUNG UND BRENNSTOFFZELLENSYSTEM**
FASTENING DEVICE AND FUEL CELL SYSTEM
DISPOSITIF DE FIXATION ET SYSTÈME DE PILE À COMBUSTIBLE

(30) Priorität: 15.06.2022 DE 102022206047
(43) Veröffentlichungstag der Anmeldung: 23.04.2025
(73) Patentinhaber: Robert Bosch GmbH, 70442 Stuttgart (DE)
(72) Erfinder: GRAGEN, Ralf, 70372 Stuttgart (DE); WACHTER, Philipp, 70439 Stuttgart-Stammheim (DE)
(86) Internationale Anmeldenummer: PCT/EP2023/066040
(87) Internationale Veröffentlichungsnummer: WO 2023/242309

(56) Entgegenhaltungen:
- DE-A1- 102010 007 981
- DE-B3- 102011 100 299

## Beschreibung

Die vorliegende Erfindung betrifft eine Befestigungsvorrichtung für ein Brennstoffzellensystem zur Befestigung eines Brennstoffzellenstapels des Brennstoffzellensystems an einem Grundkörper des Brennstoffzellensystems. Ferner betrifft die Erfindung ein Brennstoffzellensystem aufweisend einen Brennstoffzellenstapel mit einem Gegenkopplungselement, einem Grundkörper und zumindest einer Befestigungsvorrichtung.

### Stand der Technik

Bekannte Brennstoffzellensysteme bestehen aus mehreren Lagen einzelner Brennstoffzellen, in welchen die Medien Wasserstoff und Luftsauerstoff über eine Membran reagieren und dabei eine elektrische Spannung erzeugen. Das "Abfallprodukt" der Reaktion ist Wasser. Die Gesamtzahl der Brennstoffzellen bildet einen Brennstoffzellenstapel. Die Gesamtspannung des Brennstoffzellenstapels ergibt sich aus der Summe der Einzelspannungen jeder Brennstoffzelle.

Zum Schutz des Brennstoffzellenstapels vor Umwelteinflüssen und aus Sicherheitsgründen ist der Brennstoffzellenstapel üblicherweise in einem Gehäuse verbaut. Dieses Gehäuse hat unter anderem die Funktion, den Brennstoffzellenstapel aufzunehmen und zu lagern. Bei größerer Bauhöhe des Brennstoffzellenstapels und der daraus resultierenden höheren Masse reicht eine Befestigung an der Grundplatte des Gehäuses nicht mehr aus, sondern es ist zusätzlich erforderlich, den Brennstoffzellenstapel auf der Oberseite zu fixieren. Das geschieht üblicherweise mithilfe eines Loslagers, das für den Brennstoffzellenstapel in der Höhe, im Rahmen der Erfindung auch als Z-Raumachse definiert, Beweglichkeit zulässt und den Brennstoffzellenstapel in X- und Y-Richtung fixiert. Das ist vorteilhaft, da der Brennstoffzellenstapel im Betrieb durch Temperatur und Innendruck sich dehnt oder zusammenzieht. Bekannte Loslager bestehen beispielsweise seitens des Brennstoffzellenstapels aus einer Gelenklagerbuchse und seitens des Gehäuses aus einem Lagerbolzen, einem Lagerflansch und einem Zwischenflansch. Weil die Position des Gelenklagers jedoch im Brennstoffzellenstapel aufgrund von Bauteiltoleranzen ein großes Feld abdecken kann, wird der Flansch derzeit auf den Zwischenflansch geklebt, welcher in den Gehäusedeckel eingeschraubt ist. Die Verschraubung des Zwischenflanschs mit dem Deckel und die Klebung ist aufgrund der Materialien und Sauberkeitsanforderungen im Prozess anspruchsvoll und verbesserungsfähig.

Bei anderen Lagern ist auch die direkte Klebung des Lagerflanschs auf den Gehäusedeckel bekannt, also mit Entfall des Zwischenflanschs und der zugehörigen Dichtung. Die Vorbereitung und Durchführung der Klebung bleiben jedoch anspruchsvoll und unvorteilhaft.

DE 10 2010 007981 A1 offenbart eine Brennstoffzellenanordnung mit einer oberen Endplatte, einer unteren Endplatte, einer Mehrzahl zwischen der oberen Endplatte und der unteren Endplatte gestapelter Brennstoffzellen, mindestens einem zwischen der oberen Endplatte und der unteren Endplatte wirkenden Verspannungsmittel zum Ausüben einer Zugkraft zwischen der oberen Endplatte und der unteren Endplatte entlang einer Spannrichtung, einem Befestigungselement zur mechanischen Kopplung zwischen Verspannungsmittel und mindestens einer der Endplatten und/oder zwischen zwei Verspannungsmitteln, einem Kopplungsbereich, in welchem das Verspannungsmittel und das Befestigungselement miteinander verbunden sind, wobei das Befestigungselement als Excenterelement ausgebildet ist oder ein Excenterelement enthält, wobei das Excenterelement derart drehbar gelagert ist, dass sich der Kopplungsbereich in Spannrichtung bewegen lässt.

### Offenbarung der Erfindung

Die Erfindung beansprucht eine Befestigungsvorrichtung für ein Brennstoffzellensystem zur Befestigung eines Brennstoffzellenstapels des Brennstoffzellensystems an einem Grundkörper des Brennstoffzellensystems mit den Merkmalen des unabhängigen Anspruchs 1. Ferner offenbart die Erfindung ein Brennstoffzellensystem, aufweisend einen Brennstoffzellenstapel mit einem Gegenkopplungselement, einem Grundkörper und zumindest einer Befestigungsvorrichtung, gemäß den Merkmalen des unabhängigen Anspruchs 8. Weitere Vorteile und Details der Erfindung ergeben sich aus den Unteransprüchen, der Beschreibung und den Zeichnungen. Dabei gelten Merkmale, die im Zusammenhang mit der erfindungsgemäßen Befestigungsvorrichtung beschrieben sind, selbstverständlich auch im Zusammenhang mit dem erfindungsgemäßen Brennstoffzellensystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung offenbart die Erfindung eine Befestigungsvorrichtung für ein Brennstoffzellensystem zur Befestigung eines Brennstoffzellenstapels des Brennstoffzellensystems an einem Grundkörper des Brennstoffzellensystems. Die Befestigungsvorrichtung weist zwei Befestigungsscheiben auf, wobei die erste Befestigungsscheibe an dem Grundkörper befestigbar ist, wobei die zweite Befestigungsscheibe um eine erste Raumachse drehbar an der ersten Befestigungsscheibe gelagert und mit einer ersten Exzentrizität zur ersten Befestigungsscheibe angeordnet ist, wobei die zweite Befestigungsscheibe ein Kopplungselement zur Kopplung mit einem Gegenkopplungselement des Brennstoffzellenstapels aufweist, wobei das Kopplungselement mit einer zweiten Exzentrizität zur zweiten Befestigungsscheibe angeordnet ist und wobei die zwei Befestigungsscheiben mit wenigstens einem Fixiermittel der Befestigungsvorrichtung aneinander unbeweglich befestigbar sind.

Durch die Kombination der zwei Befestigungsscheiben miteinander ist es möglich, eine Vielzahl an Positionsunterschieden und/oder Abweichungen von dem Gegenkopplungselement des Brennstoffzellenstapels zu dem Kopplungselement auszugleichen und/oder mechanisch fest miteinander zu verbinden. Auf diese Weise wird ein Montageprozess des Brennstoffzellenstapels in dem Grundkörper vorteilhaft vereinfacht und beispielsweise über gängige Verschraubungen ermöglicht. Eine vorteilhafte Abdichtung des Grundkörpers erfolgt bevorzugt über herkömmliche O-Ringe.

Mittels der zwei Befestigungsscheiben, welche jeweils eine Exzentrizität aufweisen, ist es möglich, eine Mittelachse des Kopplungselements und eine Mittelachse des Gegenkopplungselements aufeinander auszurichten. In der Montage wird beispielsweise die vormontierte Befestigungsvorrichtung in einem Deckel des Grundkörpers durch manuelles Fügen und Rotation um zwei Exzenterfreiheitsgrade montiert. Ist die gewollte Position erreicht, können beide Befestigungsscheiben mittels wenigstens einem Fixiermittel, beispielsweise einer Verschraubung, fest miteinander verbunden werden, damit sich im Betrieb der Brennstoffzelle keine Relativbewegung einstellen kann. Die Befestigung der Befestigungsvorrichtung an dem Grundkörper erfolgt bevorzugt über ein geeignet ausgeführtes Halteelement, das an dem Grundkörper, insbesondere auf dem Deckel des Grundkörpers, fest verschraubt wird.

Im Rahmen der Erfindung ist bevorzugt durch die Befestigungsvorrichtung eine Verschiebung des Kopplungselements um bis zu der Summe beider Exzentrizitäten ermöglicht. Im Rahmen der Erfindung sind ferner weitere Befestigungsscheiben in der Befestigungsvorrichtung integrierbar. Die weiteren Befestigungsscheiben sind dabei jeweils derart zu verstehen, dass die weiteren Befestigungsscheiben abgestuft wie die zweite Befestigungsscheibe zur ersten Befestigungsscheibe angeordnet, beweglich und befestigt sind. Beispielhaft ist eine dritte Befestigungsscheibe drehbar an der zweiten Befestigungsscheibe und mit einer dritten Exzentrizität angeordnet. Erfindungswesentlich ist, dass die Befestigungsscheiben aneinander unbeweglich befestigbar sind und zumindest ein Kopplungselement aufweisen.

Die erste Befestigungsscheibe ist in einem gelösten Zustand an dem Grundkörper um die erste Raumachse drehbar gelagert und in einem befestigten Zustand an dem Grundkörper unbeweglich befestigt. Die zweite Befestigungsscheibe ist in einem gelösten Zustand um die erste Raumachse drehbar an der ersten Befestigungsscheibe gelagert und in einem befestigten Zustand an der ersten Befestigungsscheibe unbeweglich befestigt.

Die erste Exzentrizität ist mit Bezug auf die erste Befestigungsscheibe zu verstehen und die zweite Exzentrizität ist mit Bezug auf die zweite Befestigungsscheibe zu verstehen.

Eine derart ausgestaltete Befestigungsvorrichtung ist besonders vorteilhaft, da eine Befestigung des Brennstoffzellenstapels des Brennstoffzellensystems an einem Grundkörper des Brennstoffzellensystems durch die Befestigungsvorrichtung, insbesondere durch die zwei Befestigungsscheiben, besonders flexibel und einfach ermöglicht wird.

Gemäß einer bevorzugten Weiterentwicklung der Erfindung kann bei einer Befestigungsvorrichtung vorgesehen sein, dass die zweite Befestigungsscheibe zumindest teilweise, insbesondere vollständig, innerhalb der ersten Befestigungsscheibe angeordnet ist. Eine Anordnung der zweiten Befestigungsscheibe zumindest teilweise, insbesondere vollständig, innerhalb der ersten Befestigungsscheibe ermöglicht vorteilhaft eine Einsparung von Bauraum und eine besonders flache Ausgestaltung der Befestigungsvorrichtung. Zusätzlich oder alternativ ermöglicht die Anordnung der zweiten Befestigungsscheibe zumindest teilweise, insbesondere vollständig, innerhalb der ersten Befestigungsscheibe einen vorteilhaften Höhenausgleich zwischen dem Kopplungselement und dem Gegenkopplungselement. Für die besagte Anordnung der zweiten Befestigungsscheibe zumindest teilweise, insbesondere vollständig, innerhalb der ersten Befestigungsscheibe, weist die erste Befestigungsscheibe eine Aussparung, Vertiefung und/oder ein Loch auf. Die Aussparung, Vertiefung und/oder das Loch sind bevorzugt zumindest abschnittsweise zylindrisch und/oder konisch ausgestaltet.

Gemäß einer bevorzugten Weiterentwicklung der Erfindung kann bei einer Befestigungsvorrichtung vorgesehen sein, dass die erste Befestigungsscheibe und/oder die zweite Befestigungsscheibe zumindest abschnittsweise rund und/oder plattenförmig ausgestaltet sind. Eine zumindest abschnittsweise runde Ausgestaltung der ersten Befestigungsscheibe und/oder der zweiten Befestigungsscheibe ermöglicht vorteilhaft eine Rotation bei gleichzeitig geringem Bauraumbedarf. Ferner ermöglicht eine runde Ausgestaltung der ersten Befestigungsscheibe und/oder der zweiten Befestigungsscheibe eine vorteilhafte Führung der Befestigungsscheiben aneinander und/oder der ersten Befestigungsscheibe an dem Grundkörper. Eine plattenförmige Ausgestaltung der ersten Befestigungsscheibe und/oder der zweiten Befestigungsscheibe ermöglicht vorteilhaft eine flache Ausgestaltung der Befestigungsvorrichtung und somit einen geringen Bauraumbedarf.

Gemäß einer bevorzugten Weiterentwicklung der Erfindung kann bei einer Befestigungsvorrichtung vorgesehen sein, dass das Kopplungselement als Lagerbuchse oder Lagerbolzen ausgestaltet ist und zur Kopplung mit einer Lagerbuchse oder Lagerbolzen des Brennstoffzellenstapels ausgestaltet ist. Die konstruktive Ausgestaltung des Kopplungselements und des Gegenkopplungselements ist bevorzugt funktional gegeneinander austauschbar im Sinne der kinematischen Umkehr. Das Kopplungselement und das Gegenkopplungselement stellen im Rahmen der Erfindung zwei Hälften einer Kopplungsvorrichtung dar und dienen einer Führung und/oder Positionssicherung des Brennstoffzellenstapels an dem Grundkörper. Beispielhaft ist dafür das Kopplungselement als Lagerbuchse ausgestaltet. Zur Kopplung mit dem Kopplungselement weist in diesem Beispiel der Brennstoffzellenstapel einen Lagerbolzen als Gegenkopplungselement auf. Das Kopplungselement und das Gegenkopplungselement weisen bevorzugt eine formschlüssige Passung auf.

Gemäß einer bevorzugten Weiterentwicklung der Erfindung kann bei einer Befestigungsvorrichtung vorgesehen sein, dass ein Wert der ersten Exzentrizität einem Wert der zweiten Exzentrizität entspricht. Die Exzentrizität ist im Rahmen der Erfindung als Abstand zwischen zwei Mittelpunkten und/oder Mittelachsen der entsprechenden Bauteile und/oder Vorrichtungen zu verstehen. Wenn die erste Exzentrizität und die zweite Exzentrizität gleich groß sind, wird vorteilhaft ein, mit Bezug auf die erste Befestigungsscheibe, zentrisch angeordnetes Kopplungselement ermöglicht. Die zwei Exzentrizitäten werden für die zentrische Anordnung gegeneinander angeordnet. Der maximale Abstand und/oder Verschiebung des Kopplungselementes und/oder der Mittelachsen beträgt folglich bis zu zwei Mal dem Wert einer der Exzentrizitäten. Die zwei Exzentrizitäten werden für die maximale Verschiebung bevorzugt entlang einer Linie angeordnet.

Gemäß einer bevorzugten Weiterentwicklung der Erfindung kann bei einer Befestigungsvorrichtung vorgesehen sein, dass die zwei Befestigungsscheiben jeweils eine Dicke entlang der ersten Raumachse aufweisen, wobei die Dicke der ersten Befestigungsscheibe der Dicke der zweiten Befestigungsscheibe oder im Wesentlichen der Dicke der zweiten Befestigungsscheibe entspricht oder die Dicke der ersten Befestigungsscheibe größer als die Dicke der zweiten Befestigungsscheibe ist. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende, beabsichtigte Funktion des Merkmals zu verändern. Bevorzugt sind die zwei Befestigungsscheiben flächenbündig auf zumindest einer Seite, insbesondere einer dem Brennstoffzellenstapel zugewandten Seite, angeordnet. Bei einer gleichen Dicke von der ersten Befestigungsscheibe und der zweiten Befestigungsscheibe sind die zwei Befestigungsscheiben bevorzugt auf beiden Seiten flächenbündig angeordnet. Bei einer Ausgestaltung der zwei Befestigungsscheiben, wobei die Dicke der ersten Befestigungsscheibe größer als die Dicke der zweiten Befestigungsscheibe ist, ist die zweite Befestigungsscheibe bevorzugt in einer Vertiefung der ersten Befestigungsscheibe angeordnet. Die Vertiefung in der ersten Befestigungsscheibe ermöglicht bevorzugt eine Führung und/oder einen Anschlag für die zweite Befestigungsscheibe.

Gemäß einer bevorzugten Weiterentwicklung der Erfindung kann bei einer Befestigungsvorrichtung vorgesehen sein, dass die zweite Befestigungsscheibe formschlüssig und/oder koplanar in der ersten Befestigungsscheibe gelagert ist. Eine formschlüssige Ausgestaltung der zweiten Befestigungsscheibe zur ersten Befestigungsscheibe, insbesondere zu einer Aussparung in der ersten Befestigungsscheibe, ermöglicht eine vorteilhafte Führung und/oder Passung der Befestigungsscheiben aneinander. Zusätzlich oder alternativ wird eine vorteilhafte, insbesondere gleichmäßige und/oder leichtgängige, Beweglichkeit der zweiten Befestigungsscheibe ermöglicht. Eine koplanare Anordnung der Befestigungsscheiben zueinander ist im Rahmen der Erfindung als eine koplanare Anordnung der Befestigungsscheiben, wenigstens jeweils einer Oberfläche der Befestigungsscheiben und/oder jeweils einer Haupterstreckungsebene der Befestigungsscheiben zu verstehen. Eine derart ausgestaltete Befestigungsvorrichtung ist besonders vorteilhaft, da eine Befestigung des Brennstoffzellenstapels des Brennstoffzellensystems an einem Grundkörper des Brennstoffzellensystems durch die Befestigungsvorrichtung, insbesondere dadurch, dass die zweite Befestigungsscheibe formschlüssig und/oder koplanar in der ersten Befestigungsscheibe gelagert ist, besonders flexibel und einfach ermöglicht wird.

Gemäß einem zweiten Aspekt der Erfindung offenbart die Erfindung ein Brennstoffzellensystem, aufweisend einen Brennstoffzellenstapel mit einem Gegenkopplungselement, einen Grundkörper und zumindest eine Befestigungsvorrichtung gemäß dem ersten Aspekt. Die erste Befestigungsscheibe ist an dem Grundkörper befestigt und der Brennstoffzellenstapel ist über das Kopplungselement und das Gegenkopplungselement mit der Befestigungsvorrichtung gekoppelt. Bei dem beschriebenen Brennstoffzellensystem ergeben sich sämtliche Vorteile, die bereits zu der Befestigungsvorrichtung gemäß dem ersten Aspekt der Erfindung beschrieben worden sind. Der Grundkörper ist bevorzugt als ein Gehäuse, insbesondere mit einem Deckel, des Brennstoffzellensystems ausgestaltet. Ein derart ausgestaltetes Brennstoffzellensystem ist besonders vorteilhaft, da eine Befestigung des Brennstoffzellenstapels des Brennstoffzellensystems an dem Grundkörper des Brennstoffzellensystems durch die Befestigungsvorrichtung, insbesondere durch die zwei Befestigungsscheiben, besonders flexibel und einfach ermöglicht wird.

Gemäß einer bevorzugten Weiterentwicklung der Erfindung kann bei einem Brennstoffzellensystem vorgesehen sein, dass der Grundkörper wenigstens eine Aufnahmevorrichtung umfasst, wobei die erste Befestigungsscheibe in der Aufnahmevorrichtung angeordnet und/oder befestigt ist. Bevorzugt weist die Aufnahmevorrichtung eine Tiefe auf, die der Dicke der ersten und/oder zweiten Befestigungsscheibe entspricht. Eine Aufnahmevorrichtung ermöglicht vorteilhaft eine Positionssicherung und/oder Positionsfindung für die erste Befestigungsscheibe an und/oder in dem Grundkörper. Durch eine Ausgestaltung der Aufnahmevorrichtung als eine Vertiefung in dem Grundkörper wird vorteilhaft ein geringer Bauraumbedarf und/oder eine schlanke Ausgestaltung des Brennstoffzellensystems ermöglicht.

Gemäß einer bevorzugten Weiterentwicklung der Erfindung kann bei einem Brennstoffzellensystem vorgesehen sein, dass die Befestigungsvorrichtung, insbesondere das Kopplungselement und das Gegenkopplungselement, einen Freiheitsgrad für eine Bewegung des Brennstoffzellenstapels entlang der ersten Raumachse aufweisen. Bevorzugt ermöglicht die Befestigungsvorrichtung hingegen eine Befestigung und/oder Einschränkung der Freiheitgrade für die Bewegung des Brennstoffzellenstapels entlang der zweiten und dritten Raumachse, insbesondere durch das wenigstens eine Fixiermittel der Befestigungsvorrichtung. Eine derart ausgestaltete Befestigungsvorrichtung ist besonders vorteilhaft, da eine Befestigung des Brennstoffzellenstapels des Brennstoffzellensystems an einem Grundkörper des Brennstoffzellensystems durch die Befestigungsvorrichtung, insbesondere durch die zwei Befestigungsscheiben, besonders flexibel und einfach ermöglicht wird und wobei eine Bewegung des Brennstoffzellenstapels entlang der ersten Raumachse, beispielsweise durch Ausdehnung und/oder Erwärmung, ermöglicht wird.

Gemäß einer bevorzugten Weiterentwicklung der Erfindung kann bei einem Brennstoffzellensystem vorgesehen sein, dass die zwei Befestigungsscheiben mit wenigstens einem Fixiermittel der Befestigungsvorrichtung aneinander und/oder an dem Grundkörper unbeweglich befestigbar sind. Bevorzugt ermöglicht das wenigstens eine Fixiermittel eine unbewegliche Befestigung der zwei Befestigungsscheiben aneinander und/oder an dem Grundkörper.

Eine erfindungsgemäße Befestigungsvorrichtung sowie ein Brennstoffzellensystem werden nachfolgend anhand von Zeichnungen näher erläutert. Es zeigen jeweils schematisch:
- Figur 1: in einer kombinierten Draufsicht und Seitenansicht ein Brennstoffzellensystem mit einer Befestigungsvorrichtung,
- Figur 2: in einer Seitenansicht ein Brennstoffzellensystem mit einer Befestigungsvorrichtung, und
- Figur 3: in einer Seitenansicht ein Brennstoffzellensystem mit einer Befestigungsvorrichtung.

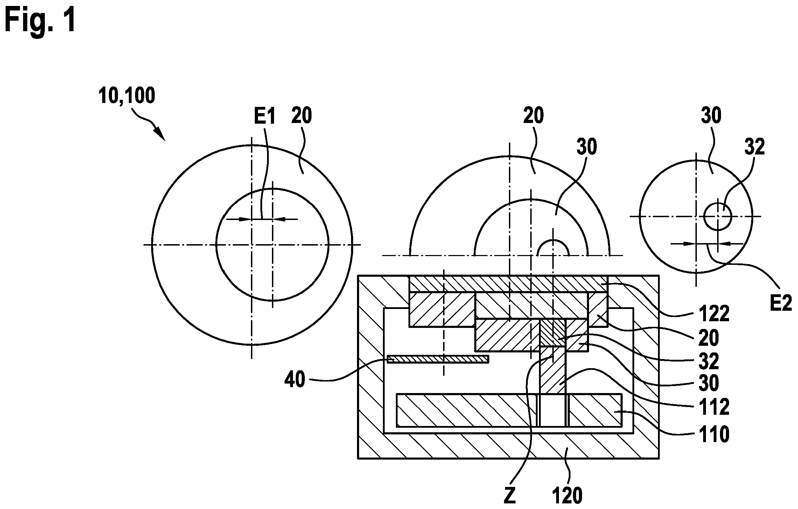

Elemente mit gleicher Funktion und Wirkungsweise sind in den Fig. 1 bis 3 jeweils mit denselben Bezugszeichen versehen.

In Fig. 1 ist schematisch in einer kombinierten Draufsicht und Seitenansicht ein Brennstoffzellensystem 100 mit einer Befestigungsvorrichtung 10 gezeigt. Das Brennstoffzellensystem 100 weist einen Brennstoffzellenstapel 110 mit einem Gegenkopplungselement 112, einen Grundkörper 120 und eine Befestigungsvorrichtung 10 auf. Die Befestigungsvorrichtung 10 weist zwei Befestigungsscheiben 20, 30 auf, wobei die erste Befestigungsscheibe 20 an dem Grundkörper 120 befestigbar ist, wobei die zweite Befestigungsscheibe 30 um eine erste Raumachse Z drehbar an der ersten Befestigungsscheibe 20 gelagert und mit einer ersten Exzentrizität E1 zur ersten Befestigungsscheibe 20 angeordnet ist. Die zweite Befestigungsscheibe 30 weist ein Kopplungselement 32 zur Kopplung mit dem Gegenkopplungselement 112 des Brennstoffzellenstapels 110 auf, wobei das Kopplungselement 32 mit einer zweiten Exzentrizität E2 zur zweiten Befestigungsscheibe 30 angeordnet ist und wobei die zwei Befestigungsscheiben 20, 30 mit einem Fixiermittel 40 der Befestigungsvorrichtung 10 aneinander unbeweglich befestigbar sind. Die erste Befestigungsscheibe 20 ist an dem Grundkörper 120 befestigbar und der Brennstoffzellenstapel 110 ist über das Kopplungselement 32 und das Gegenkopplungselement 112 mit der Befestigungsvorrichtung 10 gekoppelt. Die zweite Befestigungsscheibe 30 ist vollständig innerhalb der ersten Befestigungsscheibe 20 angeordnet. Die erste Befestigungsscheibe 20 und die zweite Befestigungsscheibe 30 sind rund und plattenförmig ausgestaltet. Das Kopplungselement 32 ist als Lagerbuchse ausgestaltet und zur Kopplung mit einer einem Lagerbolzen als Gegenkopplungselement 32 des Brennstoffzellenstapels 110 ausgestaltet. Die zweite Befestigungsscheibe 30 ist formschlüssig und koplanar in der ersten Befestigungsscheibe 20 gelagert. Der Grundkörper 120 umfasst eine Aufnahmevorrichtung 122, wobei die erste Befestigungsscheibe 20 in der Aufnahmevorrichtung 122 angeordnet und befestigt ist. Die Befestigungsvorrichtung 10, im Speziellen das Kopplungselement 32 und das Gegenkopplungselement 112, weisen einen Freiheitsgrad für eine Bewegung des Brennstoffzellenstapels 110 entlang der ersten Raumachse Z auf. Die zwei Befestigungsscheiben 20, 30 sind mit dem Fixiermittel 40 der Befestigungsvorrichtung 10 aneinander und an dem Grundkörper 120 unbeweglich befestigt.

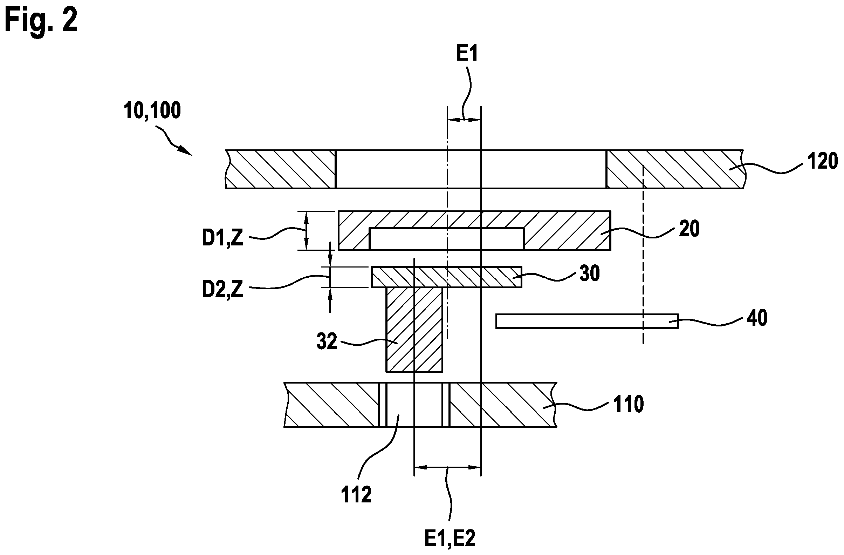

In Fig. 2 ist schematisch in einer Seitenansicht ein Brennstoffzellensystem 100 mit einer Befestigungsvorrichtung 10 gezeigt. Der Wert der ersten Exzentrizität E1 entspricht dem Wert der zweiten Exzentrizität E2. In Fig. 2 ist eine maximale Verschiebung des Kopplungselementes 32 durch die beiden Exzentrizitäten E1, E2 gezeigt. Die zwei Befestigungsscheiben 20, 30 weisen jeweils eine Dicke D1, D2 entlang der ersten Raumachse Z auf, wobei die Dicke D1 der ersten Befestigungsscheibe 20 größer als die Dicke D2 der zweiten Befestigungsscheibe 30 ist.

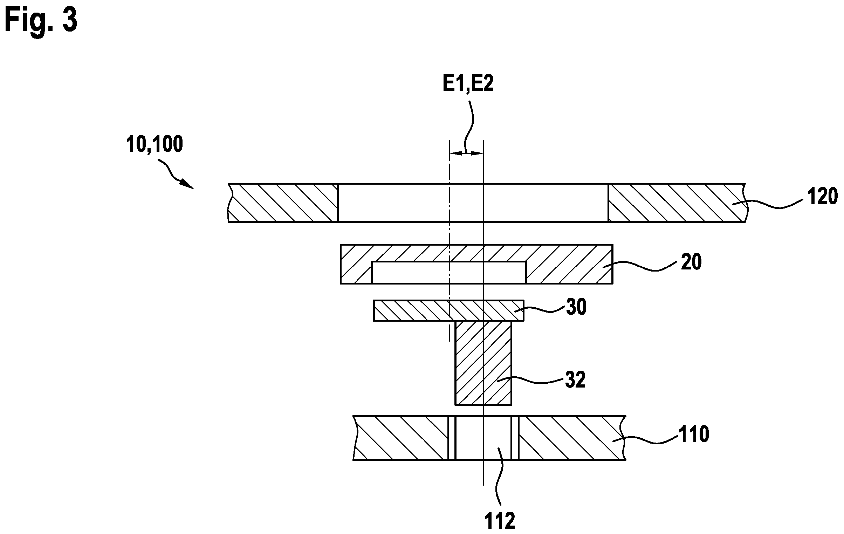

In Fig. 3 ist schematisch in einer Seitenansicht ein Brennstoffzellensystem 100 mit einer Befestigungsvorrichtung 10 gezeigt. In Fig. 3 ist eine Zentrierung des Kopplungselementes 32 durch die gegensätzliche Anordnung der beiden Exzentrizitäten E1, E2 gezeigt.

## Patentansprüche

1. Befestigungsvorrichtung (10) für ein Brennstoffzellensystem (100) zur Befestigung eines Brennstoffzellenstapels (110) des Brennstoffzellensystems (100) an einem Grundkörper (120) des Brennstoffzellensystems (100), die Befestigungsvorrichtung (10) aufweisend zwei Befestigungsscheiben (20, 30), wobei die erste Befestigungsscheibe (20) an dem Grundkörper (120) befestigbar ist, wobei die zweite Befestigungsscheibe (30) um eine erste Raumachse (Z) drehbar an der ersten Befestigungsscheibe (20) gelagert und mit einer ersten Exzentrizität (E1) zur ersten Befestigungsscheibe (20) angeordnet ist, wobei die zweite Befestigungsscheibe (30) ein Kopplungselement (32) zur Kopplung mit einem Gegenkopplungselement (112) des Brennstoffzellenstapels (110) aufweist, wobei das Kopplungselement (32) mit einer zweiten Exzentrizität (E2) zur zweiten Befestigungsscheibe (30) angeordnet ist und wobei die zwei Befestigungsscheiben (20, 30) mit wenigstens einem Fixiermittel (40) der Befestigungsvorrichtung (10) aneinander unbeweglich befestigbar sind.

2. Befestigungsvorrichtung (10) nach Anspruch 1,
**dadurch gekennzeichnet,**
**dass** die zweite Befestigungsscheibe (30) zumindest teilweise, insbesondere vollständig, innerhalb der ersten Befestigungsscheibe (20) angeordnet ist.

3. Befestigungsvorrichtung (10) nach einem der vorangegangenen Ansprüche,
**dadurch gekennzeichnet,**
**dass** die erste Befestigungsscheibe (20) und/oder die zweite Befestigungsscheibe (30) zumindest abschnittsweise rund und/oder plattenförmig ausgestaltet sind.

4. Befestigungsvorrichtung (10) nach einem der vorangegangenen Ansprüche,
**dadurch gekennzeichnet,**
**dass** das Kopplungselement (32) als Lagerbuchse oder Lagerbolzen ausgestaltet ist und zur Kopplung mit einer Lagerbuchse oder Lagerbolzen des Brennstoffzellenstapels (110) ausgestaltet ist.

5. Befestigungsvorrichtung (10) nach einem der vorangegangenen Ansprüche,
**dadurch gekennzeichnet,**
**dass** ein Wert der ersten Exzentrizität (E1) einem Wert der zweiten Exzentrizität (E2) entspricht.

6. Befestigungsvorrichtung (10) nach einem der vorangegangenen Ansprüche,
**dadurch gekennzeichnet,**
**dass** die zwei Befestigungsscheiben (20, 30) jeweils eine Dicke (D1, D2) entlang der ersten Raumachse (Z) aufweisen, wobei die Dicke (D1) der ersten Befestigungsscheibe (20) der Dicke (D2) der zweiten Befestigungsscheibe (30) entspricht oder die Dicke (D1) der ersten Befestigungsscheibe (20) größer als die Dicke (D2) der zweiten Befestigungsscheibe (30) ist.

7. Befestigungsvorrichtung (10) nach einem der vorangegangenen Ansprüche,
**dadurch gekennzeichnet,**
**dass** die zweite Befestigungsscheibe (30) formschlüssig und/oder koplanar in der ersten Befestigungsscheibe (20) gelagert ist.

8. Brennstoffzellensystem (100), aufweisend einen Brennstoffzellenstapel (110) mit einem Gegenkopplungselement (112), einen Grundkörper (120) und zumindest eine Befestigungsvorrichtung (10) gemäß einem der vorangegangenen Ansprüche, wobei die erste Befestigungsscheibe (20) an dem Grundkörper (120) befestigt ist und wobei der Brennstoffzellenstapel (110) über das Kopplungselement (32) und das Gegenkopplungselement (112) mit der Befestigungsvorrichtung (10) gekoppelt ist.

9. Brennstoffzellensystem (100) nach Anspruch 8,
**dadurch gekennzeichnet,**
**dass** der Grundkörper (120) wenigstens eine Aufnahmevorrichtung (122) umfasst, wobei die erste Befestigungsscheibe (20) in der Aufnahmevorrichtung (122) angeordnet und/oder befestigt ist.

10. Brennstoffzellensystem (100) nach Anspruch 8 oder 9,
**dadurch gekennzeichnet,**
**dass** die Befestigungsvorrichtung (10), insbesondere das Kopplungselement (32) und das Gegenkopplungselement (112), einen Freiheitsgrad für eine Bewegung des Brennstoffzellenstapels (110) entlang der ersten Raumachse (Z) aufweisen.

11. Brennstoffzellensystem (100) nach einem der vorangegangenen Ansprüche 8 bis 10,
**dadurch gekennzeichnet,**
**dass** die zwei Befestigungsscheiben (20, 30) mit wenigstens einem Fixiermittel (40) der Befestigungsvorrichtung (10) aneinander und/oder an dem Grundkörper (120) unbeweglich befestigbar sind.

## Claims

1. Fastening device (10) for a fuel-cell system (100) for fastening a fuel-cell stack (110) of the fuel-cell system (100) to a main body (120) of the fuel-cell system (100), the fastening device (10) having two fastening discs (20, 30), wherein the first fastening disc (20) is able to be fastened to the main body (120), wherein the second fastening disc (30) is mounted on the first fastening disc (20) so as to be rotatable about a first spatial axis (Z) and is arranged with a first eccentricity (E1) in relation to the first fastening disc (20), wherein the second fastening disc (30) has a coupling element (32) for coupling to a counterpart coupling element (112) of the fuel-cell stack (110), wherein the coupling element (32) is arranged with a second eccentricity (E2) in relation to the second fastening disc (30), and wherein the two fastening discs (20, 30) are able to be fastened immovably to one another by way of at least one fixing means (40) of the fastening device (10).

2. Fastening device (10) according to Claim 1,
**characterized**
**in that** the second fastening disc (30) is arranged at least partially, in particular completely, within the first fastening disc (20).

3. Fastening device (10) according to either of the preceding claims,
**characterized**
**in that** the first fastening disc (20) and/or the second fastening disc (30) are/is of at least sectionally round and/or plate-shaped form.

4. Fastening device (10) according to either of the preceding claims,
**characterized**
**in that** the coupling element (32) is in the form of a bearing bush or bearing pin and is configured for coupling to a bearing bush or bearing pin of the fuel-cell stack (110).

5. Fastening device (10) according to either of the preceding claims,
**characterized**
**in that** a value of the first eccentricity (E1) corresponds to a value of the second eccentricity (E2).

6. Fastening device (10) according to either of the preceding claims,
**characterized**
**in that** the two fastening discs (20, 30) each have a thickness (D1, D2) along the first spatial axis (Z), wherein the thickness (D1) of the first fastening disc (20) corresponds to the thickness (D2) of the second fastening disc (30) or the thickness (D1) of the first fastening disc (20) is greater than the thickness (D2) of the second fastening disc (30).

7. Fastening device (10) according to either of the preceding claims,
**characterized**
**in that** the second fastening disc (30) is mounted in a form-fitting and/or coplanar manner in the first fastening disc (20).

8. Fuel-cell system (100) having a fuel-cell stack (110) with a counterpart coupling element (112), having a main body (120) and having at least one fastening device (10) according to one of the preceding claims, wherein the first fastening disc (20) is fastened to the main body (120), and wherein the fuel-cell stack (110) is coupled via the coupling element (32) and the counterpart coupling element (112) to the fastening device (10).

9. Fuel-cell system (100) according to Claim 8,
**characterized**
**in that** the main body (120) comprises at least one receiving device (122), wherein the first fastening disc (20) is arranged and/or fastened in the receiving device (122).

10. Fuel-cell system (100) according to Claim 8 or 9,
**characterized**
**in that** the fastening device (10), in particular the coupling element (32) and the counterpart coupling element (112), has a degree of freedom for a movement of the fuel-cell stack (110) along the first spatial axis (Z).

11. Fuel-cell system (100) according to one of Claims 8 to 10,
**characterized**
**in that** the two fastening discs (20, 30) are able to be fastened immovably to one another and/or to the main body (120) by way of at least one fixing means (40) of the fastening device (10).

## Revendications

1. Dispositif de fixation (10) pour un système de piles à combustible (100) destiné à fixer un empilement de piles à combustible (110) du système de piles à combustible (100) à un corps de base (120) du système de piles à combustible (100), le dispositif de fixation (10) présentant deux disques de fixation (20, 30), le premier disque de fixation (20) pouvant être fixé au corps de base (120), le deuxième disque de fixation (30) étant monté rotatif sur le premier disque de fixation (20) autour d'un premier axe spatial (Z) et étant disposé avec une première excentricité (E1) par rapport au premier disque de fixation (20), le deuxième disque de fixation (30) présentant un élément d'accouplement (32) pour l'accouplement à un élément d'accouplement antagoniste (112) de l'empilement de piles à combustible (110), l'élément d'accouplement (32) étant disposé avec une deuxième excentricité (E2) par rapport au deuxième disque de fixation (30), et les deux disques de fixation (20, 30) pouvant être fixés l'un à l'autre de manière immobile au moyen d'au moins un moyen d'immobilisation (40) du dispositif de fixation (10).

2. Dispositif de fixation (10) selon la revendication 1,
**caractérisé en ce que**
le deuxième disque de fixation (30) est disposé au moins partiellement, en particulier complètement, à l'intérieur du premier disque de fixation (20).

3. Dispositif de fixation (10) selon l'une quelconque des revendications précédentes,
**caractérisé en ce que**
le premier disque de fixation (20) et/ou le deuxième disque de fixation (30) sont au moins par sections ronds et/ou en forme de plaque.

4. Dispositif de fixation (10) selon l'une quelconque des revendications précédentes,
**caractérisé en ce que**
l'élément d'accouplement (32) est conçu sous la forme d'une douille de palier ou d'un boulon de palier et est conçu pour être accouplé à une douille de palier ou à un boulon de palier de l'empilement de piles à combustible (110).

5. Dispositif de fixation (10) selon l'une quelconque des revendications précédentes,
**caractérisé en ce que**
une valeur de la première excentricité (E1) correspond à une valeur de la deuxième excentricité (E2).

6. Dispositif de fixation (10) selon l'une quelconque des revendications précédentes,
**caractérisé en ce que**
les deux disques de fixation (20, 30) présentent chacun une épaisseur (D1, D2) le long du premier axe spatial (Z), l'épaisseur (D1) du premier disque de fixation (20) correspondant à l'épaisseur (D2) du deuxième disque de fixation (30) ou l'épaisseur (D1) du premier disque de fixation (20) étant supérieure à l'épaisseur (D2) du deuxième disque de fixation (30).

7. Dispositif de fixation (10) selon l'une quelconque des revendications précédentes,
**caractérisé en ce que**
le deuxième disque de fixation (30) est monté par complémentarité de forme et/ou coplanaire dans le premier disque de fixation (20).

8. Système de piles à combustible (100), comprenant un empilement de piles à combustible (110) avec un élément d'accouplement antagoniste (112), un corps de base (120) et au moins un dispositif de fixation (10) selon l'une quelconque des revendications précédentes, le premier disque de fixation (20) étant fixé au corps de base (120) et l'empilement de piles à combustible (110) étant accouplé au dispositif de fixation (10) par l'intermédiaire de l'élément d'accouplement (32) et de l'élément d'accouplement antagoniste (112).

9. Système de piles à combustible (100) selon la revendication 8,
**caractérisé en ce que**
le corps de base (120) présente au moins un dispositif de réception (122), le premier disque de fixation (20) étant disposé et/ou fixé dans le dispositif de réception (122).

10. Système de piles à combustible (100) selon la revendication 8 ou la revendication 9,
**caractérisé en ce que**
le dispositif de fixation (10), en particulier l'élément d'accouplement (32) et l'élément d'accouplement antagoniste (112), présentent un degré de liberté pour un déplacement de l'empilement de piles à combustible (110) le long du premier axe spatial (Z).

11. Système de piles à combustible (100) selon l'une quelconque des revendications 8 à 10,
**caractérisé en ce que**
les deux disques de fixation (20, 30) peuvent être fixés de manière immobile l'un à l'autre et/ou au corps de base (120) au moyen d'au moins un moyen d'immobilisation (40) du dispositif de fixation (10).
